# EUROPEAN PATENT APPLICATION

(11) **EP 2 656 711 A1**
(43) Date of publication of application: **30.10.2013**
(21) Application number: 13158265.2
(22) Date of filing: 07.03.2013
(51) Int. Cl.: A01B 59/06

(54) **Linkage component on an agricultural vehicle**

(30) Priority: 26.04.2012 GB 201207364
(71) Applicant: AGCO International GmbH, 8212 Neuhausen am Rheinfall (CH)
(72) Inventor: Kaemmerer, Andreas, 97268 Gaubuettelbrunn (DE)
(74) Representative: AGCO Intellectual Property Department

(57) **Abstract**

A mounting component forming an operational part of a front linkage on an agricultural vehicle, wherein said component is a unitary body adapted for storing at least one fluid.

## Description

This invention relates to a mounting component for operating a linkage on an agricultural machine. More specifically, the invention relates to a mounting component for operating a front linkage on an agricultural tractor.

Agricultural tractors are typically provided with a three point linkage or hitch at the rear of the tractor to which an implement can be attached and, increasingly, such linkages are also being provided at the front of tractors. A front linkage arrangement typically comprises a mounting component pivotably mounted to the tractor and having linkage mounts by means of which an implement may be mounted to the tractor. The mounting component can be moved by hydraulic cylinders to raise or lower the implement.

A tractor requires various fluids in varying quantities to be carried on the tractor in fluid reserves. Hydraulic fluids, fuel, cleaning fluids and exhaust treatment fluids need to be carried. With the ever developing need for efficient tractors, space on a tractor is at a premium. Re-arranging components on a tractor to provide extra space for a further or larger component, such as a fluid reserve, is a time consuming and costly task.

At the front of a tractor, for example, a canister is used to collect hydraulic oil which leaks from the hydraulic couplings to a front-mounted implement. The installation of a canister on a tractor has space and cost implications.

It is an object of the invention to overcome, or at least al leviate the problems associated with the storage of fluids on a tractor.

According to the invention there is provided a mounting component for operating a front linkage on an agricultural vehicle, wherein said mounting component is a unitary (one-piece) body adapted to store fluids.

Preferably, the mounting component comprises a central cavity in which a fluid is stored.

More preferably, the mounting component is provided with at least one fluid inlet or outlet.

The mounting component may be adapted to receive tubing. This way fluid can be delivered to, or from a desired component on the vehicle.

Preferably, the mounting component is an hydraulic oil reserve. More preferably, the mounting component is a leak oil reserve which collects oil leaking from the hydraulic couplings.

The tractor does not therefore need a canister to store the leak oil thus saving money and space.

Preferably the mounting component is provided with means for showing the volume of liquid stored in the mounting component. Therefore, if the cavity of the mounting component is full it can be emptied.

The invention will now be described, by way of example only with reference to the following drawings in which:
Figure 1 shows a perspective view of a front linkage mounting component in accordance with the invention attached to an agricultural tractor;
Figure 2 shows the component of Figure 1 demounted from the tractor;
Figure 3 shows the demounted component of Figure 2 with a cavity reservoir partially extracted;
Figure 4 is a rear perspective view of the component of Figure 2; and
Figure 5 shows a cross sectional view along line A-A of Figure 4.

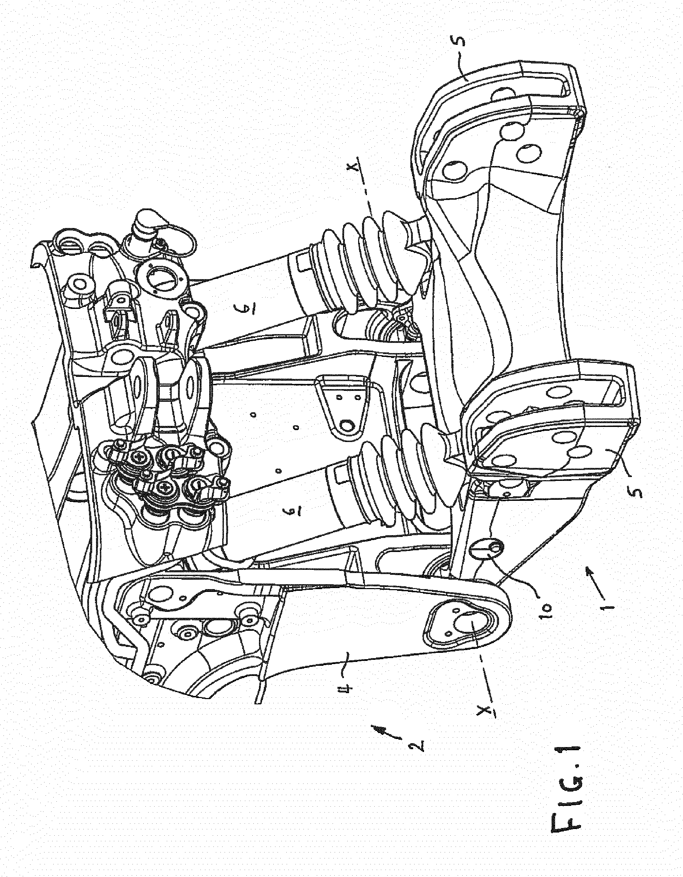

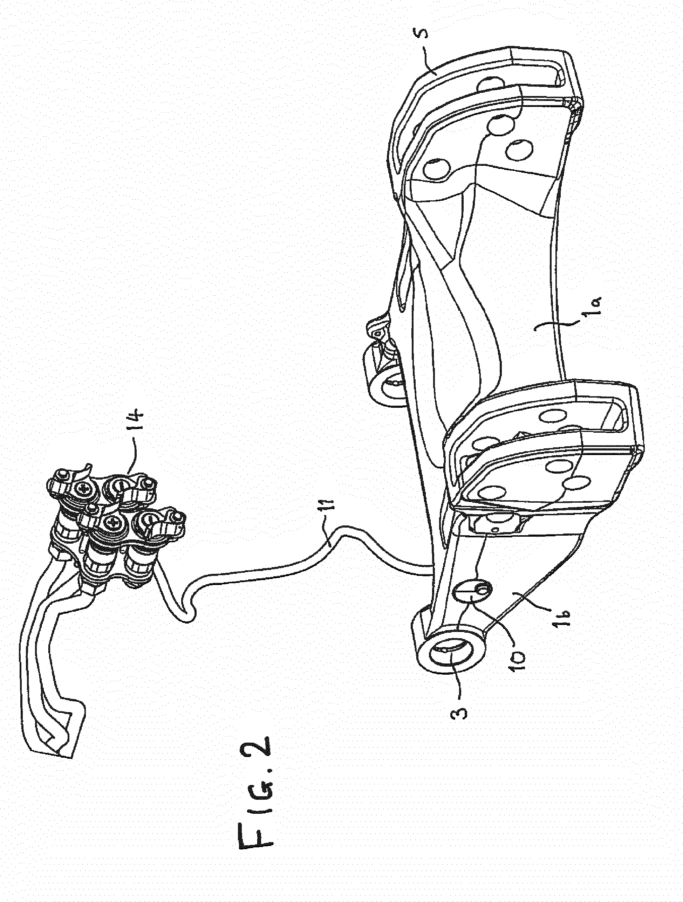

Figure 1 shows a front linkage mounting component 1 mounted on the front of a tractor, shown generally at 2. As can be seen more clearly in Figure 2, the mounting component is a generally H-shaped cast metal component having a transverse body portion la linking side arms 1b extending forward and behind the main body. At the rear end of each side arm is a through bore 3 to receive a pivot pin (not shown) which pin passes through corresponding bores in support arms 4 of the tractor frame to allow the mounting component 1 to pivot relative to the tractor 2 about axis X (Fig. 1). At the forward end of each side arm 1b there is a respective linkage mount 5 to which front linkage components enabling connection to an implement may be attached.

A pair of hydraulic cylinders 6 are each pivotably attached at one end to the tractor 2 and at the other to the mounting component 1. When the cylinders are operated, the mounting component (and any implement mounted thereto) may be raised and lowered.

The main body la of the component has a cavity 7 in which a fluid may be stored. The fluid for example may be hydraulic oil, pressurised air, or a cleaning fluid such as a windscreen cleanin fluid. The main body 1a is provided with at least one inlet 8 and one outlet 9 through which a fluid can enter, or exit, the cavity 7. Although shown on a rear part of the component, the inlet 8 may instead be provided on a front, side, top or bottom part.

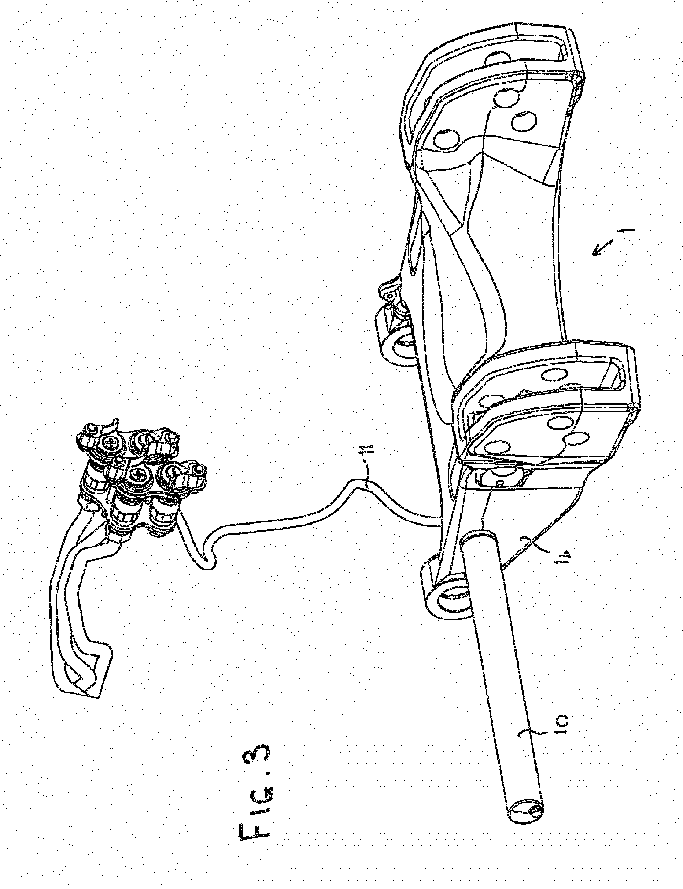

In a preferred arrangement, a separate fluid reservoir 10 is housed within the cavity 7 to receive the fluid. This reservoir component is suitably formed of a pressure moulded plastics material (although other materials may be used) and, as shown by Figure 3, can be simply extracted from the mounting component for maintenance or replacement. This is of particular benefit where it is desired to change the fluid received (for example from hydraulic oil to windscreen washer fluid) and it is necessary to avoid cross-contamination.

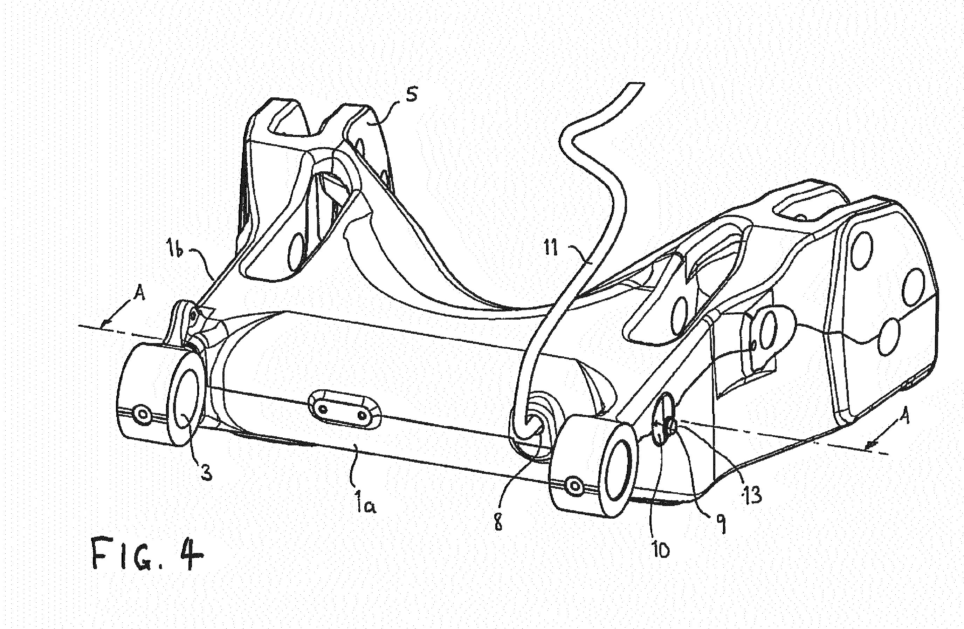

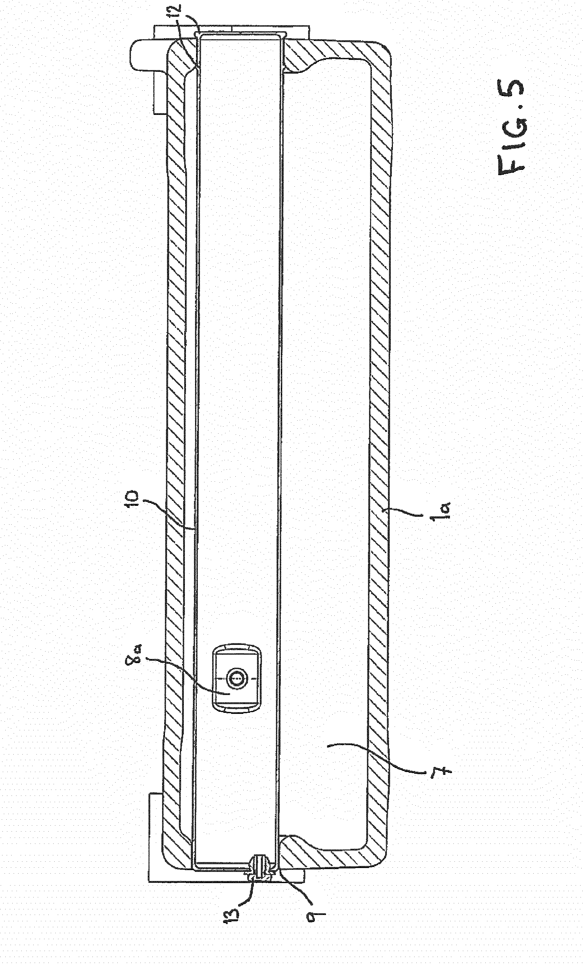

As seen in Figures 3, 4 and 5, the reservoir 10 is a generally cylindrical container extending the length of the transverse main body 1a to emerge with end faces coplanar with (or slightly proud of) the surfaces of the two side arms 1b. A part of the way along the axial length of the reservoir there is an inlet connection 8a which, when the reservoir is positioned within the cavity, aligns with the inlet opening 8 in the cast body of the mounting component to enable connection of an input line 11. As shown at the right-hand side of Figure 5, the outer surface of the reservoir may be provided with one or more ridges or projections 12 which cooperate with the cast body of the mounting component such that the reservoir is a snap-fit within the component. Alternative arrangements having recessed portions on the reservoir surface cooperating with projections from the cast body are also possible. As will be recognised, if it is desired that the reservoir hold pressurised fluids, the wall thicknesses of the reservoir will need to be greater than shown in Figure 5.

On one end face of the reservoir cylinder there is shown a discharge plug 13 by means of which the reservoir may be emptied without the reservoir needing to be removed from the mounting component. As will be readily understood, the discharge plug may be replaced by an outlet connection to a fluid conduit, or the arrangement of input and output may be reversed. Other variations in terms of the number and location of inputs and outputs to the reservoir are also contemplated.

In Figure 2, a set of hydraulic couplings 14 are shown. These are mounted to the front of the tractor and provide a supply of hydraulic oil to a mounted implement. Typically, any leakage from these couplings would be transported away from the couplings in tubing to a separate canister mounted to the tractor. With the present invention, the leakage oil can be transported by an inflow line 11, for example of transparent flexible plastic tubing, through inlet 8 into the reservoir 10 housed within the mounting component 1. By the use of a transparent tube extending generally upwardly from the reservoir, it can be seen by external inspection when the reservoir is full an requires draining.

Althoug not shown in the drawings, the cavity 7 could be divided into two or more fluid compartments, each suitably containing a respective reservoir, for holding two or more fluids. Each reservoir would be provided with an associated inlet/outlet.

## Claims

1. A mounting component for operating a front linkage on an agricultural vehicle, wherein said component is a unitary body adapted for storing at least one fluid.

2. A mounting component as claimed in claim 1 wherein said mounting component is provided with a central cavity in which at least one fluid is stored.

3. A mounting component as claimed in claim 1 or claim 2 wherein said mounting component is provided with at least one fluid inlet.

4. A mounting component as claimed in claim 3 wherein the inlet is located on a rear part of the mounting component.

5. A mounting component as claimed in claim 4 wherein the inlet is connected to a inflow line carrying fluid into the mounting component.

6. A mounting component as claimed in claim 5 wherein the inflow line indicates the amount of fluid stored in the mounting component.

7. A mounting component as claimed in any preceding claim wherein the mounting component is a reserve for at least one fluid being hydraulic oil, or windscreen cleaning fluid, or pressurised air.
